# EUROPÄISCHE PATENTSCHRIFT

(11) **EP 3 788 270 B1**
(45) Veröffentlichungstag und Bekanntmachung des Hinweises auf die Patenterteilung: **23.03.2022**
(21) Anmeldenummer: 19718569.7
(22) Anmeldetag: 16.04.2019
(51) Int. Cl.: F16D 3/76, H02K 11/21

(54) **ELEKTROMOTOR MIT EINER KUPPLUNG ZWISCHEN DER ROTORWELLE UND DER WELLE EINES WINKELSENSORS**
ELECTRIC MOTOR WITH A COUPLING BETWEEN THE ROTOR SHAFT AND THE SHAFT OF AN ANGLE SENSOR
MOTEUR ÉLECTRIQUE AVEC UN ACCOUPLEMENT ENTRE L'ARBRE DU ROTOR ET L'ARBRE D'UN CAPTEUR D'ANGLE

(30) Priorität: 03.05.2018 DE 102018003546
(43) Veröffentlichungstag der Anmeldung: 10.03.2021
(73) Patentinhaber: SEW-EURODRIVE GmbH & Co. KG, 76646 Bruchsal (DE)
(72) Erfinder: FICHTNER-PFLAUM, Gerolf, 76703 Kraichtal-Unteröwisheim (DE); RIEGER, Florian, 76227 Karlsruhe (DE)
(86) Internationale Anmeldenummer: PCT/EP2019/025106
(87) Internationale Veröffentlichungsnummer: WO 2019/211001

(56) Entgegenhaltungen:
- DE-A1- 3 740 061
- DE-A1-102006 043 897
- DE-A1-102008 028 603
- DE-A1-102011 012 632
- DE-A1-102013 002 049
- DE-B3- 10 361 886
- JP-A- 2007 146 984

## Beschreibung

Die Erfindung betrifft einen Elektromotor, aufweisend eine Rotorwelle, insbesondere eine drehbar gelagerte Rotorwelle, und einen Winkelsensor.

Es ist allgemein bekannt, dass die Winkellage einer Rotorwelle mit Winkelsensoren erfassbar ist.

**Aus der** DE 37 40 061 A1 **ist als nächstliegender Stand der Technik eine Kupplung zur Übertragung von Drehbewegungen bekannt.**

**Aus der** DE 103 61 886 B3 **ist ein Drehgeber** für den Einsatz in Verbindung mit Antriebsmotoren, die mit einer Bremse ausgerüstet sind, bekannt, wobei zwischen einer Hohlwelle und einer Buchse eine aus Polyurethan bestehende Hülse angeordnet ist.

**Aus der** DE 10 2011 012 632 A1 **ist eine Antriebsvorrichtung mit einem Elektromotor und einem Winkelsensor** bekannt, wobei zwischen einer Rotorwelle und einer Sensorwelle eine Balgkupplung mit einem Balgabschnitt aus Stahl, Aluminium oder Kunststoff angeordnet ist.

**Aus der** DE 10 2006 043 897 A1 **ist eine** zwischen einer Motorwelle und einer Geberwelle angeordnete **Wellenkupplung** mit einem zwischen zwei klauenartigen Kupplungselemente angeordneten Drehmomentübertragungselement **bekannt.**

**Aus der** DE 10 2008 028 603 A1 **ist ein Elektromotor mit** einem Geber und einer elektromagnetisch betätigbaren Bremse **bekannt.**

**Aus der** DE 10 2013 002 049 A1 **ist eine Sensoranordnung bekannt.**

**Aus der** JP 2007 146 984 A **ist ein elastisch verzahnter Ring bekannt.**

Der Erfindung liegt daher die Aufgabe zugrunde, eine Winkelerfassung einer Rotorwelle weiterzubilden, wobei eine robuste Betriebsweise erreicht werden soll.

Erfindungsgemäß wird die Aufgabe bei dem Elektromotor nach den in Anspruch 1 angegebenen Merkmalen gelöst.

Wichtige Merkmale der Erfindung bei dem Elektromotor sind, dass er eine Rotorwelle, insbesondere eine drehbar gelagerte Rotorwelle, und einen Winkelsensor aufweist,
wobei der Winkelsensor eine Sensorwelle und ein Gehäuse aufweist,
wobei die Sensorwelle mittels einer Kupplung mit der Rotorwelle drehfest verbunden ist,
wobei die Kupplung ein erstes Kupplungsteil, ein zweites Kupplungsteil und ein zwischen erstem und zweitem Kupplungsteil angeordnetes Dämpfungsteil aufweist,
wobei das erste Kupplungsteil drehfest mit der Rotorwelle verbunden ist und die Sensorwelle drehfest mit dem zweiten Kupplungsteil verbunden ist.

Von Vorteil ist dabei, dass ein robuster Betrieb ermöglicht ist, da Quermomentstöße und

Drehmomentrucke zum Winkelsensor hin möglichst unterdrückbar sind. Somit ist eine möglichst fehlerfreie Winkelerfassung ermöglicht. Unabhängig davon, ob die Stöße oder Rucke von einer Bremse des Motors eingetragen werden oder von einer vom Motor angetriebenen Last, dämpft die Kupplung ab, wobei das Dämpfungsteil elastisch verformt wird. Bei Überlastung, also unzulässig großer Verformung, des Dämpfungsteils tritt ein Formschluss der Kupplung in Umfangsrichtung in Kraft, so dass allerdings auch Stöße oder Rucke unverzerrt übertragen werden.

Bei einer vorteilhaften Ausgestaltung ist das Dämpfungsteil als Hohlteil ausgeformt, insbesondere als Buchse. Von Vorteil ist dabei, dass das Dämpfungsteil auf das zweite Kupplungsteil aufsteckbar ist und somit zwischen erstem und zweitem Kupplungsteil einpressbar ist.

Erfindungsgemäß weist das erste Kupplungsteil eine axial gerichtete sacklochartige Ausnehmung auf, in welcher das Dämpfungsteil aufgenommen ist, wobei das erste Kupplungsteil einen außenkonusförmigen Bereich und ein Außengewinde aufweist zur Verbindung mit der Rotorwelle, wobei das Außengewinde in ein Innengewinde der Rotorwelle eingeschraubt ist und der außenkonusförmige Bereich des ersten Kupplungsteils an einem innenkonusförmigen Bereich der Rotorwelle anliegt, und dass das zweite Kupplungsteil einen innenkonusförmigen Bereich und ein Innengewinde, insbesondere eine axial gerichtete Gewindebohrung, aufweist, wobei in das Innengewinde ein Außengewinde der Sensorwelle eingeschraubt ist und ein außenkonusförmiger Bereich der Sensorwelle am innenkonusförmigen Bereich des zweiten Kupplungsteils anliegt. Von Vorteil ist dabei, dass mittels der konusförmigen Bereiche ein einfaches Zentrieren beim Zusammenfügen erreichbar ist und außerdem eine sehr große Haftreibung erreichbar ist, insbesondere bei einer Materialpaarung Stahl mit Stahl. Wenn also erstes und zweites Kupplungsteil ebenso wie die Rotorwelle und die Sensorwelle aus Stahl gefertigt sind, ist diese große Haftreibung, insbesondere Selbsthemmung, erreichbar. Zusätzlich wird mit den Schraubverbindungen ein Formschluss bewirkt.

Bei einer vorteilhaften Ausgestaltung weist das zweite Kupplungsteil eine Außenverzahnung auf, insbesondere eine Geradverzahnung,
wobei das Dämpfungsteil auf die Außenverzahnung aufgesteckt ist, insbesondere wobei Materialbereiche des Dämpfungsteils in die Zahnlücken der Außenverzahnung zumindest teilweise hineinragen. Von Vorteil ist dabei, dass die Außenverzahnung aus Metall, insbesondere Stahl, gefertigt ist und das Dämpfungsteil aus einem elastischen Material, so dass das Material in die Zahnlücken sich zumindest teilweise hineinentspannt. Somit ist ein Formschluss in Umfangsrichtung zwischen Dämpfungsteil und zweitem Kupplungsteil erreicht.

Bei einer vorteilhaften Ausgestaltung weist das zweite Kupplungsteil einen von der Außenverzahnung axial beabstandeten Absatz auf, welcher das Dämpfungsteil axial begrenzt. Von Vorteil ist dabei, dass dieser Absatz von der

Außenverzahnung aus gesehen eine Verbreiterung des zweiten Kupplungsteils darstellt. Somit liegt das Dämpfungsteil an diesem Absatz an und ist axial begrenzt. Bei einer vorteilhaften Ausgestaltung weist das zweite Kupplungsteil im axial zwischen dem Absatz und der Außenverzahnung angeordneten Bereich einen Außendurchmesser auf, der kleiner ist als der größte Außendurchmesser des zweiten Kupplungsteils im Bereich der Außenverzahnung, insbesondere als der Kopfkreisdurchmesser der Außenverzahnung, insbesondere so, dass das Dämpfungsteil in den axialen Bereich zwischen dem Absatz und der Außenverzahnung zumindest teilweise hineinragt, insbesondere elastisch hineingedrückt wird, und somit axial zwischen der Außenverzahnung und dem Absatz gesichert ist. Von Vorteil ist dabei, dass das Dämpfungsteil auf dem zweiten Kupplungsteil verliersicher und formschlüssig angeordnet ist. Hierzu entspannt sich das elastische Material des Dämpfungsteils zum Bereich hin, so dass in axialer Richtung eine formschlüssige Verbindung bewirkt ist. In Umfangsrichtung ist das Dämpfungsteil formschlüssig mit der Außenverzahnung des zweiten Kupplungsteils verbunden.

Bei einer vorteilhaften Ausgestaltung ist auf der von der Außenverzahnung axial gesehen abgewandten Seite des Absatzes ein Bereich des zweiten Kupplungsteils als Außensechskant ausgeformt. Von Vorteil ist dabei, dass dieser Außensechskant des zweiten Kupplungsteils in Umfangsrichtung spielbehaftet formschlüssig innerhalb eines Innensechskants des ersten Kupplungsteils angeordnet ist. Somit ist ein Gegenhalten beim Schraubverbinden des zweiten Kupplungsteils mit der Sensorwelle nicht notwendig, wenn die Bremse eingefallen ist und somit die Rotorwelle gegengehalten ist.

Wichtig ist dabei auch, dass der vom Dämpfungsteil überdeckte axiale Bereich beabstandet ist von dem von dem Außensechskant des zweiten Kupplungsteils überdeckten axialen Bereich.

Bei einer vorteilhaften Ausgestaltung ist der Außenumfangs des Dämpfungsteils unrund geformt, insbesondere als weiterer Außensechskant,
und das erste Kupplungsteil weist in dem das Dämpfungsteil aufnehmenden Bereich einen unrunden Innenumfang auf, so dass das Dämpfungsteil in Umfangsrichtung formschlüssig mit dem ersten Kupplungsteil verbunden ist. Von Vorteil ist dabei, dass das Dämpfungsteil im ersten Kupplungsteil in Umfangsrichtung formschlüssig aufgenommen ist.

Vorzugsweise weist das Dämpfungsteil eine diskrete Drehsymmetrie bezogen auf die Drehachse der Rotorwelle auf. Dabei ist die Drehsymmetrie mindestens achtzählig.

Bei einer vorteilhaften Ausgestaltung weist das erste Kupplungsteil eine unrund ausgeformte, insbesondere als Innensechskant ausgeformte, Ausnehmung, insbesondere Innenwandung, auf,

insbesondere wobei der von der Ausnehmung überdeckte axiale Bereich mit dem von dem Außensechskant des zweiten Kupplungsteils überdeckten axialen Bereich überlappt. Von Vorteil ist dabei, dass bei Überlastung des Dämpfungsteils eine in Umfangsrichtung formschlüssige Verbindung des ersten mit dem zweiten Kupplungsteil bewirkt wird.

Bei einer vorteilhaften Ausgestaltung weist der Elektromotor eine elektromagnetisch betätigbare Bremse auf,
wobei ein Bremsbelagträger mit der Rotorwelle drehfest, aber axial verschiebbar verbunden ist,
wobei in einem Magnetkörper eine mit einem elektrischen Strom beaufschlagbare Wicklung, insbesondere Ringwicklung, aufgenommen ist,
wobei zwischen Bremsbelagträger und Wicklung eine mit dem Magnetkörper drehfest verbundene, aber axial verschiebbare Ankerscheibe, insbesondere ferromagnetische Ankerscheibe, angeordnet ist,
wobei ein am Magnetkörper abgestütztes Federteil die Ankerscheibe zum Bremsbelagträger hin drückt, insbesondere so dass bei Bestromung der Wicklung die Ankerscheibe entgegen der Federkraft zur Wicklung und/oder zum Magnetkörper hingezogen wird und bei Nichtbestromung der Wicklung die Ankerscheibe auf den Bremsbelagträger drückt, so dass der Bremsbelagträger auf eine auf der von der Ankerscheibe abgewandten Seite des Bremsbelagträgers angeordnete Bremsfläche gedrückt wird. Von Vorteil ist dabei, dass bei Stromausfall die Bremse einfällt. Somit ist bei Montage der Kupplung die Bremse eingefallen und fungiert als Mittel zum Gegenhalten beim Einschrauben des ersten Kupplungsteils in die Rotorwelle.

Bei einer vorteilhaften Ausgestaltung ist die Kupplung zwischen der Bremse und dem Winkelsensor angeordnet. Von Vorteil ist dabei, dass der Winkelsensor geschützt wird vor Querkraftstößen und/oder Drehmomentrucken. Weitere Vorteile ergeben sich aus den Unteransprüchen.

Die Erfindung wird nun anhand von schematischen Abbildungen näher erläutert:
In der Figur 1 ist ein Querschnitt durch einen Ausschnitt eines Elektromotors mit Bremse und Winkelsensor 6 dargestellt, wobei eine Kupplung zwischen Rotorwelle 15 und Winkelsensor angeordnet ist.

In der Figur 2 ist ein Querschnitt durch die Kupplung dargestellt.

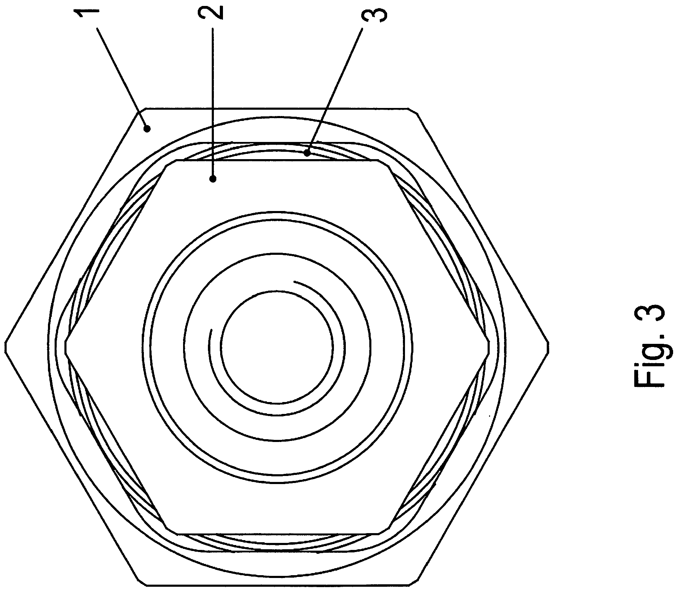

In der Figur 3 ist eine Draufsicht auf die Kupplung dargestellt.

In der Figur 4 ist ein zweites Kupplungsteil 2 der Kupplung in Schrägansicht dargestellt.

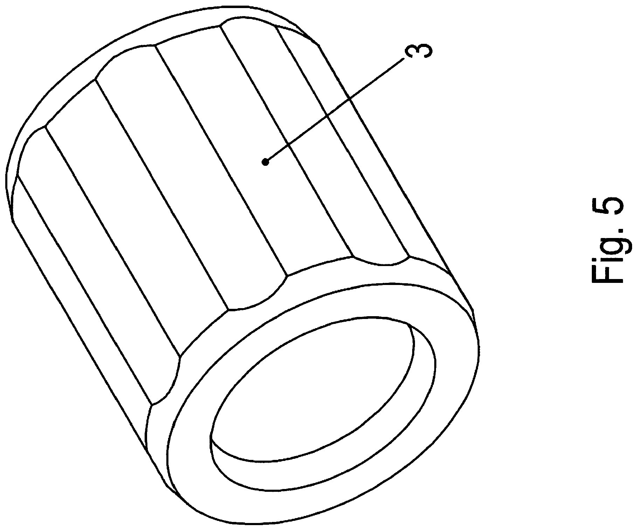

In der Figur 5 ist ein zwischen einem ersten und dem zweiten Kupplungsteil 2 angeordnetes Dämpfungsteil 3 der Kupplung in Schrägansicht dargestellt.

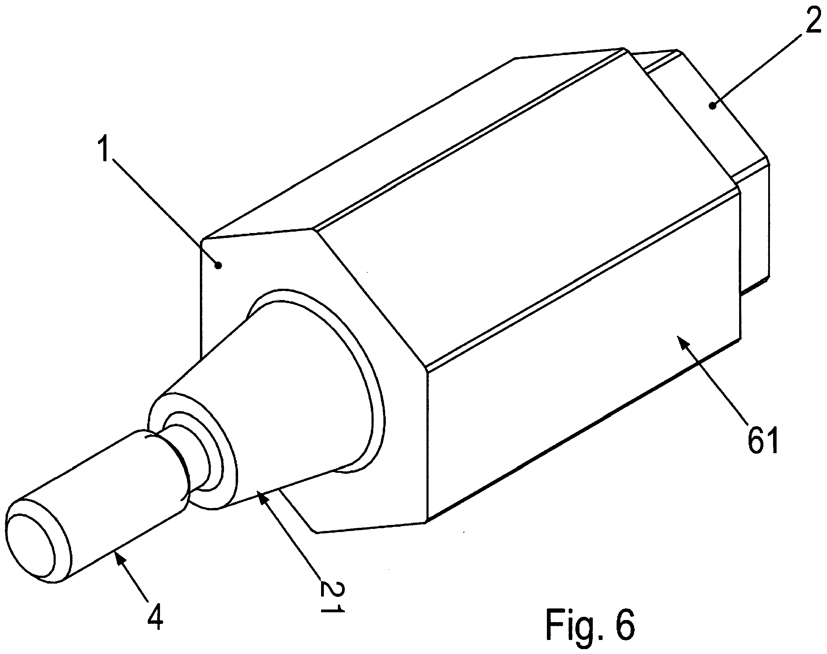

In der Figur 6 ist die Kupplung in Schrägansicht dargestellt.

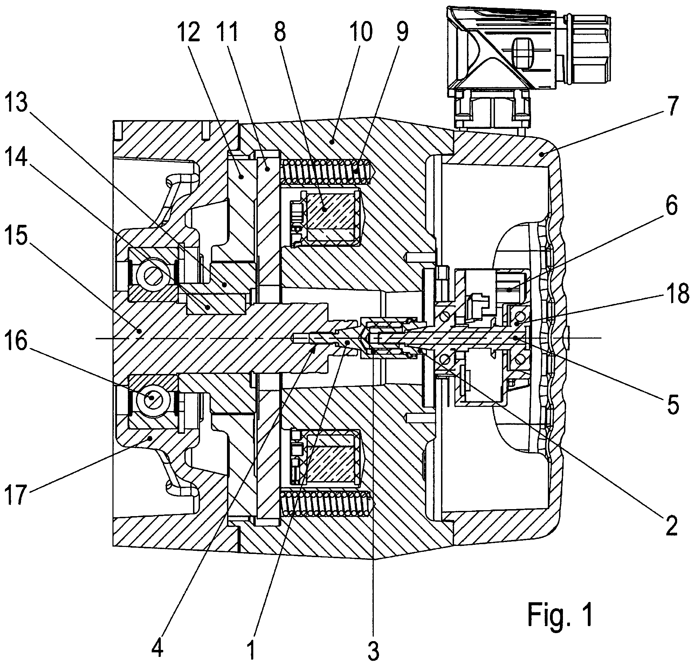

Wie in Figur 1 dargestellt, weist der Elektromotor ein Lagerflansch 17 auf, welches mit dem Stator des Elektromotors verbunden ist und ein Lager 16 aufnimmt, mittels dessen die Rotorwelle 15 drehbar gelagert ist.

Am Lagerflansch 17 ist auf dessen der Bremse zugewandten Seite eine Bremsfläche ausgebildet.

Auf die Rotorwelle 15 ist ein Mitnehmer 13 aufgesteckt, welcher drehfest mit der Rotorwelle 15 verbunden ist, insbesondere formschlüssig drehfest mit der Rotorwelle 15 verbunden ist.

Der Mitnehmer 13 ist ringartig ausgeführt ist mittels einer Passfederverbindung mit der Rotorwelle drehfest verbunden, insbesondere unter Verwendung einer zwischen Rotorwelle 15 und Mitnehmer 13 zwischengeordneten Passfeder 14.

Der Mitnehmer 13 weist eine Außenverzahnung auf. Insbesondere erstreckt sich diese Außenverzahnung in axialer Richtung, also parallel zur Drehachse der Rotorwelle.

Auf den Mitnehmer 13 ist ein Bremsbelagträger 12 aufgeschoben, welcher hohl ausgeführt ist und an seiner Innenseite eine Innenverzahnung aufweist, welche mit der Außenverzahnung im Eingriff ist. Somit ist der Bremsbelagträger 12 drehfest, aber axial verschiebbar, mit der Rotorwelle 15 verbunden.

Ein Magnetkörper 10 ist mit dem Lagerflansch drehfest verbunden, insbesondere schraubverbunden. Der Magnetkörper weist eine ringförmige umlaufende Ausnehmung auf, in welcher eine elektrisch bestrombare Wicklung 8 aufgenommen ist.

Die Wicklung 8 ist als Ringwicklung ausgeführt, wobei die Ringachse die Drehachse der Rotorwelle 15 ist.

Eine Ankerscheibe 11 ist drehfest aber axial verschiebbar mit dem Magnetkörper 10 verbunden. Ein am Magnetkörper 10 abgestütztes Federteil 9 drückt auf die Ankerscheibe11, so dass bei Bestromung der Wicklung die Ankerscheibe 11 die von dem Federteil 9 erzeugte Federkraft überwindend zum Magnetkörper 10, insbesondere zur Wicklung 8 hingezogen wird, so dass die Bremse gelüftet wird.

Bei Nicht-Bestromung der Wicklung 9 drückt das Federteil 9 die Ankerscheibe 11 zum Bremsbelagträger 12 hin, so dass dieser auf die am Lagerflansch 17 ausgebildete Bremsfläche gedrückt wird. Somit wird dann der axial beidseitig mit Bremsbelägen versehene Bremsbelagträger 12 zwischen Ankerscheibe 11 und Bremsfläche in Reibkontakt gebracht, so dass die Bremse also bei Nichtbestromung einfällt.

Beim Lüften und auch beim Einfallen der Bremse wird ein Drehmomentruck in die Rotorwelle 15 eingetragen. Aber auch lastseitig ist eine Belastung, wie Drehmomentruck und/oder Quermoment, eintragbar.

Um einem Winkelsensor 6 die Erfassung der Winkellage der Rotorwelle 15 möglichst ungestört zu überlassen, ist daher erfindungsgemäß zwischen Rotorwelle 15 und dem Sensor 6 eine Kupplung angeordnet.

Hierbei weist die Kupplung ein erstes Kupplungsteil 1, das drehfest mit der Rotorwelle 15 verbunden ist, und ein zweites Kupplungsteil 2, das drehfest mit dem Rotor des Sensors verbunden ist, auf.

Zwischen dem ersten und dem zweiten Kupplungsteil 1, 2 ist ein Dämpfungsteil 3 angeordnet. Das Dämpfungsteil 3 ist vorzugsweise aus einem Elastomer, insbesondere aus Gummi oder aus einem Kunststoff, ausgeführt.

Das erste Kupplungsteil 1 weist an seinem der Rotorwelle 15 zugewandten axialen Endbereich ein Außengewinde auf, mit welchem die Rotorwelle 15 in eine in die Rotorwelle 16 zentrisch eingebrachtes, axial gerichtetes Gewindebohrung eingeschraubt ist.

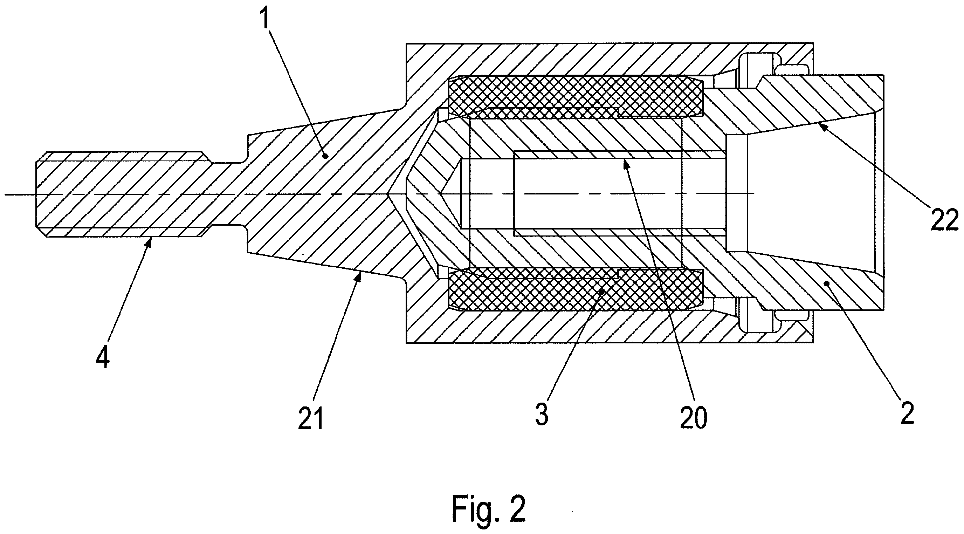

Wie in Figur 2 gezeigt, weist das erste Kupplungsteil 1 eine Ausnehmung auf, insbesondere eine Sacklochartige, zum Sensor 6 hin mündende Ausnehmung auf, in welche das Dämpfungsteil 3 eingeführt und aufgenommen ist. Die Ausnehmung ist vorzugsweise unrund ausgeführt, insbesondere polygonförmig oder innenverzahnt.

Das Dämpfungsteil 3 ist buchsenförmig ausgeführt. Es weist daher eine axial durchgehende Ausnehmung auf, in welche das zweite Kupplungsteil 2 zumindest teilweise hineingesteckt ist.

Die radial äußere Oberfläche des Dämpfungsteils 3 ist unrund ausgeführt, insbesondere polygonal oder mit in Umfangsrichtung voneinander regelmäßig beabstandeten, sich axial erstreckenden Vertiefungen. Alternativ ist auch eine Außenverzahnung vorsehbar, insbesondere mit einer Zähnezahl, die kleiner als 12 ist.

Somit ist das Dämpfungsteil 3 formschlüssig im ersten Kupplungsteil 1 aufgenommen.

Zusätzlich ist es derart elastisch verformt, dass auch eine kraftschlüssige Verbindung zwischen Dämpfungsteil 3 und erstem Kupplungsteil 1 vorhanden ist.

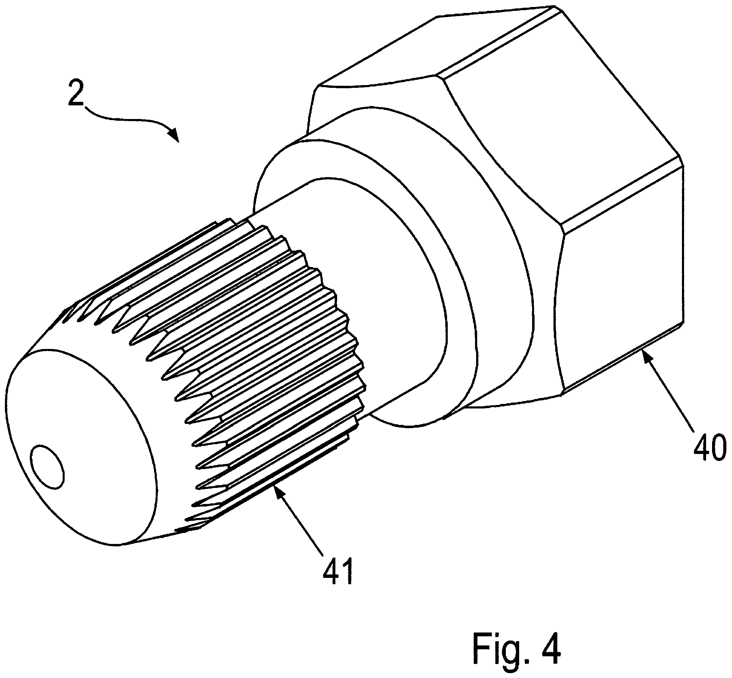

Ebenso weist ein im Dämpfungsteil 3 eingesteckter Bereich des zweiten Kupplungsteils 2 eine Außenverzahnung 41 auf, wie in Figur 4 gezeigt, oder ist polygonal ausgeführt.

Somit ist auch zwischen Dämpfungsteil 3 und zweitem Kupplungsteil 2 eine formschlüssige Verbindung ausgeführt. Zusätzlich ist das Dämpfungsteil 3 derart elastisch verformt, dass auch eine kraftschlüssige Verbindung zwischen Dämpfungsteil 3 und zweitem Kupplungsteil 2 vorhanden ist.

Das erste Kupplungsteil 1 weist in dem vom Dämpfungsteil 3 überdeckten axialen Bereich an seiner Außenoberfläche eine sechskantförmige Kontur auf, so dass ein Drehbewegen des ersten Kupplungsteils 1 mit einem Maulschlüssel ermöglicht ist.

An dem dem Sensor 6 zugewandten axialen Endbereich des ersten Kupplungsteils 1 ist ein Innensechskant ausgeformt, wobei das zweite Kupplungsteil 2 in dem vom Innensechskant überdeckten axialen Bereich außensechskantig geformt ist. Dabei ist der größte Außendurchmesser der außensechskantigen Form größer als der kleinste lichte Durchmesser des Innensechskants. Auf diese Weise ist ein spielbehafteter Formschluss erreicht.

Das erste Kupplungsteil 1 weist in dem vom Dämpfungsteil 3 überdeckten axialen Bereich einen unrunden Oberflächenbereich auf, insbesondere einen polygonalen, insbesondere außensechskantförmigen, Oberflächenbereich 61 auf. Somit ist ein Gegenhalten mit einem Werkzeug ermöglicht.

**Die Erfindung bewirkt eine vorteilhafte Montage. Hierzu wird nämlich zuerst die Kupplung, also das erste Kupplungsteil 1 mit der Rotorwelle 15 verbunden, indem ein Außengewinde 4 des ersten Kupplungsteils 1 in eine mittig in der Rotorwelle 15 angeordnete Gewindebohrung eingeschraubt wird. Dabei ist bei eingefallener Bremse kein Gegenhalten an der Rotorwelle 1 notwendig.**

**Nach Verbinden der Kupplung mit der Rotorwelle 15 wird der drehbare Teil des Sensors 6, insbesondere also Sensorwelle 18, verbunden. Hierzu wird die Sensorwelle** 18 in **das zweite Kupplungsteil 2 eingesteckt, so dass die konusförmigen Bereiche der Sensorwelle 18 und des zweiten Kupplungsteils 2 aneinander anliegen. Danach wird eine Schraube 5 durch die hohle Sensorwelle 18 hindurch mit ihrem Gewindebereich in das zweite Kupplungsteil 2, insbesondere in das Innengewinde 20 des zweiten Kupplungsteils 2, eingeschraubt.**

**Hierbei ist wiederum kein Gegenhalten notwendig, da der Formschluss zwischen dem Außensechskantberiech 40 des zweiten Kupplungsteils 2 und dem Innensechskantbereich des ersten Kupplungsteils 1 zum Tragen kommt. Auf diese Weise genügt das durch die eingefallene Bremse erzeugte Gegenhalten.**

**Das Dämpfungsteil 3 ist auf die Außenverzahnung 41 des zweiten Kupplungsteils 2 aufgeschoben und dabei elastisch verformt, so dass Material des Dämpfungsteils 3 in Zahnlücken der Außenverzahnung 41 hineinragt. Außerdem ist die unrunde Außenkontur des Dämpfungsteils 3 im Eingriff mit einer entsprechend unrunden Innenkontur des ersten Kupplungsteils 1. Dabei ist diese Innenkontur als Innensechskant ausgeführt, welcher im oben beschriebenen Eingriff ist mit dem Außensechskantbereich 40 des zweiten Kupplungsteils 2.**

**Der von dem Außensechskant 40 des zweiten Kupplungsteils 2 überdeckte axiale Bereich überlappt mit dem vom Innensechskant des ersten Kupplungsteils 1 überdeckten axialen Bereich.**

Der vom hohlen Bereich des ersten Kupplungsteils 1 überdeckte axiale Bereich umfasst den vom Dämpfungsteil 3 überdeckten axialen Bereich.

Das Dämpfungsteil 3 ist auf die Außenverzahnung 41 aufgeschoben und in einen axial neben der Verzahnung liegenden Bereich des zweiten Kupplungsteils 2 eingeschrumpft, da dieser Bereich einen kleineren Außendurchmesser aufweist als die Außenverzahnung 41. Vorzugsweise gleicht der Außendurchmesser in dem Bereich dem kleinsten Außendurchmesser im Fußbereich des jeweiligen Zahns der Außenverzahnung 41 oder ist sogar kleiner. Auf jeden Fall ist der Außendurchmesser des Bereichs kleiner als der maximale Außendurchmesser der Außenverzahnung 41.

Das Innengewinde 20 ist entsprechend zum Außengewinde 4 ausgeführt, insbesondere wäre also schraubverbindbar mit dem Außengewinde 4.

Der am ersten Kupplungsteil 1 ausgeformte Außenkonus 21 weist denselben Konuswinkel auf wie auch der am zweiten Kupplungsteil 2 ausgeformte Innenkonus 22.

Der Außenkonus 21 ist axial zwischen der Außenverzahnung 4 und Außensechskant 61 des ersten Kupplungsteils 1 angeordnet.

Der Innenkonus 22 ist auf der von der Rotorwelle 15 axial abgewandten Seite des Innengewindes 20 am zweiten Kupplungsteil 2 ausgeformt.

Da das Dämpfungsteil 3 an einem am zweiten Kupplungsteil 2 ausgeformten Absatz anliegt, ist es durch diesen Absatz in axialer Richtung begrenzt. Entgegen der axialen Richtung ist es durch die Außenverzahnung 41 begrenzt, da deren größter Außendurchmesser größer als in dem axial zwischen der Außenverzahnung 41 und dem Absatz zwischengeordneten Bereich ist. Somit ist es axial gesichert, insbesondere axial formschlüssig gesichert, angeordnet.

Bei der Herstellung wird das Dämpfungsteil 3 auf das zweite Kupplungsteil 2 aufgepresst und danach wird das erste Kupplungsteil 1 über das Dämpfungsteil 3 gestülpt und aufgepresst. Auf diese Weise ist somit eine spielfreie Drehmomentdurchleitung ermöglicht.

Das Gehäuse des Sensors 6 ist mit einer Lüfterhaube verbunden, insbesondere zur Drehmomentabstützung. Die Lüfterhaube 7 ist mit dem Magnetkörper 10 und/oder dem Lagerflansch 17 direkt oder indirekt verbunden.

### Bezugszeichenliste

- 1: erstes Kupplungsteil

- 2: zweites Kupplungsteil
- 3: Dämpfungsteil
- 4: Außengewinde
- 5: Schraube
- 6: Winkelsensor
- 7: Lüfterhaube
- 8: Wicklung
- 9: Federteil
- 10: Magnetkörper
- 11: Ankerscheibe
- 12: Bremsbelagträger
- 13: Mitnehmer mit Außenverzahnung
- 14: Passfeder
- 15: Rotorwelle
- 16: Lager
- 17: Lagerflansch
- 18: Sensorwelle
- 20: Innengewinde
- 21: Außenkonus
- 22: Innenkonus
- 40: Außensechskant
- 41: Außenverzahnung
- 61: Außensechskant

## Patentansprüche

1. Elektromotor,
aufweisend eine Rotorwelle (15), insbesondere eine drehbar gelagerte Rotorwelle (15), und einen Winkelsensor (6),
wobei der Winkelsensor (6) eine Sensorwelle (18) und ein Gehäuse aufweist,
wobei die Sensorwelle (18) mittels einer Kupplung mit der Rotorwelle (15) drehfest verbunden ist,
wobei die Kupplung ein erstes Kupplungsteil (1), ein zweites Kupplungsteil (2) und ein zwischen erstem und zweitem Kupplungsteil (1, 2) angeordnetes Dämpfungsteil (3) aufweist,
wobei das erste Kupplungsteil (1) drehfest mit der Rotorwelle (15) verbunden ist und die Sensorwelle (18) drehfest mit dem zweiten Kupplungsteil (2) verbunden ist,
wobei **das erste Kupplungsteil** (1) **eine axial gerichtete sacklochartige Ausnehmung aufweist, in welcher das Dämpfungsteil** (3) **aufgenommen ist,**
**dadurch gekennzeichnet, dass**
**erste Kupplungsteil** (1) **einen außenkonusförmigen** Bereich (21) **und ein Außengewinde** (4) **aufweist zur Verbindung mit der** Rotorwelle (15), **wobei das Außengewinde** (4) **in ein Innengewinde der Rotorwelle** (15) **eingeschraubt ist und der außenkonusförmige Bereich** (21) **des ersten Kupplungsteils** (1) **an einem innenkonusförmigen Bereich der Rotorwelle anliegt,**
**und dass das zweite Kupplungsteil** (2) **einen innenkonusförmigen Bereich** (22) **und ein** Innengewinde (20), **insbesondere eine axial gerichtete Gewindebohrung, aufweist, wobei in das Innengewinde** (20) **ein Außengewinde der Sensorwelle** (18) **eingeschraubt ist und ein außenkonusförmiger Bereich der Sensorwelle** (18) **am innenkonusförmigen Bereich** (22) **des zweiten Kupplungsteils** (2) **anliegt.**

2. Elektromotor nach Anspruch 1,
**dadurch gekennzeichnet, dass**
das Dämpfungsteil (3) als Hohlteil ausgeformt ist, insbesondere als Buchse.

3. Elektromotor nach **Anspruch 2,**
**dadurch gekennzeichnet, dass**
das zweite Kupplungsteil (2) eine Außenverzahnung (41) aufweist, insbesondere eine Geradverzahnung,
wobei das Dämpfungsteil (3) auf die Außenverzahnung (41) aufgesteckt ist, insbesondere wobei Materialbereiche des Dämpfungsteils (3) in die Zahnlücken der Außenverzahnung (41) zumindest teilweise hineinragen.

4. Elektromotor nach **Anspruch 3,**
**dadurch gekennzeichnet, dass**
das zweite Kupplungsteil (2) einen von der Außenverzahnung (41) axial beabstandeten Absatz
aufweist, welcher das Dämpfungsteil (3) axial begrenzt.

5. Elektromotor nach **Anspruch 4,**
**dadurch gekennzeichnet, dass**
das zweite Kupplungsteil i (2)
im axial zwischen dem Absatz und der Außenverzahnung (41) angeordneten Bereich einen Außendurchmesser aufweist, der kleiner ist als der größte Außendurchmesser des zweiten Kupplungsteils (2) im Bereich der Außenverzahnung (41),
insbesondere als der Kopfkreisdurchmesser der Außenverzahnung (41),
insbesondere so, dass das Dämpfungsteil (3) in den axialen Bereich zwischen dem Absatz und der Außenverzahnung (41) zumindest teilweise hineinragt,
insbesondere elastisch hineingedrückt wird, und somit axial zwischen der Außenverzahnung (41) und dem Absatz gesichert ist.

6. Elektromotor nach **einem der Ansprüche** 4 oder **5,**
**dadurch gekennzeichnet, dass**
auf der von der Außenverzahnung (41) axial gesehen abgewandten Seite des Absatzes ein
Bereich des zweiten Kupplungsteils (2) als Außensechskant (40) ausgeformt ist.

7. Elektromotor nach **einem der Ansprüche 2 bis 6,**
**dadurch gekennzeichnet, dass**
der Außenumfang des Dämpfungsteils (3) unrund geformt ist, insbesondere als weiterer Außensechskant,
und dass das erste Kupplungsteil (1) in dem das Dämpfungsteil (3) aufnehmenden Bereich einen
unrunden Innenumfang aufweist, so dass das Dämpfungsteil (3) in Umfangsrichtung formschlüssig mit dem ersten Kupplungsteil (1) verbunden ist.

8. Elektromotor nach mindestens einem der vorangegangenen Ansprüche,
**dadurch gekennzeichnet, dass**
das erste Kupplungsteil (1) eine unrund ausgeformte, insbesondere als Innensechskant ausgeformte, Ausnehmung, insbesondere Innenwandung, aufweist,
insbesondere wobei der von der Ausnehmung überdeckte axiale Bereich mit dem von dem Außensechskant (40) des zweiten Kupplungsteils (2) überdeckten axialen Bereich überlappt.

9. Elektromotor nach mindestens einem der vorangegangenen Ansprüche,
**dadurch gekennzeichnet, dass**
der Elektromotor eine elektromagnetisch betätigbare Bremse aufweist,
wobei ein Bremsbelagträger (12) mit der Rotorwelle (15) drehfest, aber axial verschiebbar verbunden ist,
wobei in einem Magnetkörper (10) eine mit einem elektrischen Strom beaufschlagbare Wicklung (8),
insbesondere Ringwicklung (8), aufgenommen ist,
wobei zwischen Bremsbelagträger (12) und Wicklung (8) eine mit dem Magnetkörper (10) drehfest
verbundene, aber axial verschiebbare Ankerscheibe (11), insbesondere ferromagnetische Ankerscheibe (11), angeordnet ist,
wobei ein am Magnetkörper (10) abgestütztes Federteil (9) die Ankerscheibe zum Bremsbelagträger (12) hin drückt,
insbesondere so dass bei Bestromung der Wicklung (8) die Ankerscheibe (11) entgegen der
Federkraft zur Wicklung (8) und/oder zum Magnetkörper (10) hingezogen wird und bei Nichtbestromung der Wicklung (8) die Ankerscheibe (11) auf den Bremsbelagträger (12) drückt, so dass der Bremsbelagträger (12) auf eine auf der von der Ankerscheibe (11) abgewandten Seite des Bremsbelagträgers (12) angeordnete Bremsfläche gedrückt wird.

10. Elektromotor nach mindestens einem der vorangegangenen Ansprüche,
**dadurch gekennzeichnet, dass**
die Kupplung zwischen der Bremse und dem Winkelsensor (6) angeordnet ist.

## Claims

1. Electric motor
comprising a rotor shaft (15), in particular a rotatably mounted rotor shaft (15), and an angle sensor(6),
the angle sensor (6) comprising a sensor shaft (18) and a housing,
the sensor shaft (18) being connected to the rotor shaft (15) for conjoint rotation by means of a coupling,
the coupling comprising a first coupling part (1), a second coupling part (2) and a damping part (3) arranged between the first and the second coupling part (1, 2),
the first coupling part (1) being connected to the rotor shaft (15) for conjoint rotation and the sensor shaft (18) being connected to the second coupling part (2) for conjoint rotation,
the first coupling part (1) comprising an axially oriented blind-hole-like cut-out in which the damping part (3) is received,
**characterised in that**
the first coupling part (1) comprises an external-cone-like region (21) and an external thread (4) for connecting to the rotor shaft (15), the external thread (4) being screwed into an internal thread of the rotor shaft (15), and the external-cone-like region (21) of the first coupling part (1) abutting an internal-cone-like region of the rotor shaft,
and **in that** the second coupling part (2) comprises an internal-cone-like region (22) and an internal thread (20), in particular an axially oriented threaded hole, an external thread of the sensor shaft (18) being screwed into the internal thread (20), and an external-cone-like region of the sensor shaft (18) abutting the internal-cone-like region (22) of the second coupling part (2).

2. Electric motor according to claim 1,
**characterised in that**
the damping part (3) is shaped as a hollow part, in particular as a bushing.

3. Electric motor according to claim 2,
**characterised in that**
the second coupling part (2) comprises external teeth (41), in particular spur teeth,
the damping part (3) being placed onto the external teeth (41), in particular material regions of the damping part (3) projecting into the tooth spaces between the external teeth (41) at least in part.

4. Electric motor according to claim 3,
**characterised in that**
the second coupling part (2) comprises a shoulder, which is axially spaced apart from the external teeth (41) and axially delimits the damping part (3).

5. Electric motor according to claim 4,
**characterised in that**
in the region arranged axially between the shoulder and the external teeth (41), the second coupling part (2) has an external diameter that is smaller than the greatest external diameter of the second coupling part (2) in the region of the external teeth (41), in particular smaller than the tip diameter of the external teeth (41), in particular such that the damping part (3) projects into the axial region between the shoulder and the external teeth (41) at least in part, in particular is resiliently pushed therein, and is thus secured axially between the external teeth (41) and the shoulder.

6. Electric motor according to any of claims 4 or 5,
**characterised in that**
on the side of the shoulder facing away from the external teeth (41) when viewed axially, a region of the second coupling part (2) is shaped as a hexagon head (40).

7. Electric motor according to any of claims 2 to 6,
**characterised in that**
the outer circumference of the damping part (3) is shaped in a non-circular manner, in particular in the form of a further hexagon head,
and **in that**, in the region accommodating the damping part (3), the first coupling part (1) has a non-circular internal circumference, such that the damping part (3) is form-fittingly connected to the first coupling part (1) in the circumferential direction.

8. Electric motor according to at least one of the preceding claims,
**characterised in that**
the first coupling part (1) comprises a cut-out, in particular an internal wall, that is shaped in a non-circular manner, in particular shaped as a hex socket,
the axial region covered by the cut-out in particular overlapping the axial region covered by the hexagon head (40) of the second coupling part (2).

9. Electric motor according to at least one of the preceding claims,
**characterised in that**
the electric motor comprises an electromagnetically operable brake,
a brake lining carrier (12) being connected to the rotor shaft (15) for conjoint rotation but so as to be axially displaceable,
a winding (8), in particular an annular winding (8), to which an electrical current can be applied being received in a magnetic member (10),
an armature disc (11), in particular a ferromagnetic armature disc (11), that is connected to the magnetic member (10) for conjoint rotation but is axially displaceable being arranged between the brake lining carrier (12) and the winding (8),
a spring part (9) supported on the magnetic member (10) pushing the armature disc towards the brake lining carrier (12),
in particular such that when the winding (8) is energised, the armature disc (11) is pulled towards the winding (8) and/or towards the magnetic member (10) counter to the spring force, and when the winding (8) is not energised, the armature disc (11) pushes against the brake lining carrier (12) such that the brake lining carrier (12) is pushed onto a braking surface arranged on the side of the brake lining carrier (12) facing away from the armature disc (11).

10. Electric motor according to at least one of the preceding claims, **characterised in that**
the coupling is arranged between the brake and the angle senor (6).

## Revendications

1. Moteur électrique,
présentant un arbre de rotor (15), en particulier un arbre de rotor (15) monté de manière rotative, et un capteur d'angle (6),
dans lequel le capteur d'angle (6) présente un arbre de capteur (18) et un boîtier, dans lequel l'arbre de capteur (18) est relié à l'arbre de rotor (15) de manière solidaire en rotation au moyen d'un accouplement,
dans lequel l'accouplement présente une première partie d'accouplement (1), une deuxième partie d'accouplement (2) et une partie d'amortissement (3) disposée entre les première et deuxième parties d'accouplement (1, 2),
dans lequel la première partie d'accouplement (1) est reliée de manière solidaire en rotation à l'arbre de rotor (15) et l'arbre de capteur (18) est relié de manière solidaire en rotation à la deuxième partie d'accouplement (2),
dans lequel la première partie d'accouplement (1) présente un évidement de type trou borgne orienté axialement, dans lequel la partie d'amortissement (3) est reçue, **caractérisé en ce que**
la première partie d'accouplement (1) présente une zone en forme de cône extérieur (21) et un filetage extérieur (4) pour la liaison à l'arbre de rotor (15), dans lequel le filetage extérieur (4) est vissé dans un filetage intérieur de l'arbre de rotor (15) et la zone en forme de cône extérieur (21) de la première partie d'accouplement (1) vient en appui contre une zone en forme de cône intérieur de l'arbre de rotor,
et que la deuxième partie d'accouplement (2) présente une zone en forme de cône intérieur (22) et un filetage intérieur (20), en particulier un alésage fileté orienté axialement, dans lequel un filetage extérieur de l'arbre de capteur (18) est vissé dans le filetage intérieur (20) et une zone en forme de cône extérieur de l'arbre de capteur (18) vient en appui contre la zone en forme de cône intérieur (22) de la deuxième partie d'accouplement (2).

2. Moteur électrique selon la revendication 1,
**caractérisé en ce que**
la partie d'amortissement (3) est réalisée sous la forme d'une partie creuse, en particulier d'une douille.

3. Moteur électrique selon la revendication 2,
**caractérisé en ce que**
la deuxième partie d'accouplement (2) présente une denture extérieure (41), en particulier une denture droite,
dans lequel la partie d'amortissement (3) est emboîtée sur la denture extérieure (41), en particulier dans lequel des zones de matériau de la partie d'amortissement (3) font saillie au moins partiellement dans les entredents de la denture extérieure (41).

4. Moteur électrique selon la revendication 3,
**caractérisé en ce que**
la deuxième partie d'accouplement (2) présente un épaulement espacé axialement de la denture extérieure (41), lequel limite axialement la partie d'amortissement (3).

5. Moteur électrique selon la revendication 4,
**caractérisé en ce que**
la deuxième partie d'accouplement (2) présente, dans la zone disposée axialement entre l'épaulement et la denture extérieure (41), un diamètre extérieur qui est inférieur au plus grand diamètre extérieur de la deuxième partie d'accouplement (2) dans la zone de la denture extérieure (41), en particulier au diamètre du cercle de tête de la denture extérieure (41),
en particulier de sorte que la partie d'amortissement (3) fait saillie au moins partiellement dans la zone axiale entre l'épaulement et la denture extérieure (41), en particulier y est pressée de manière élastique et est ainsi assujettie axialement entre la denture extérieure (41) et l'épaulement.

6. Moteur électrique selon l'une des revendications 4 ou 5,
**caractérisé en ce que**
sur le côté de l'épaulement opposé à la denture extérieure (41), vu axialement, une zone de la deuxième partie d'accouplement (2) est réalisée sous la forme d'un hexagone mâle (40).

7. Moteur électrique selon l'une des revendications 2 à 6,
**caractérisé en ce que**
la circonférence extérieure de la partie d'amortissement (3) est réalisée de manière non circulaire, en particulier sous la forme d'un autre hexagone mâle,
et que la première partie d'accouplement (1) présente une circonférence intérieure non circulaire dans la zone recevant la partie d'amortissement (3), de sorte que la partie d'amortissement (3) est reliée par complémentarité de forme à la première partie d'accouplement (1) dans la direction circonférentielle.

8. Moteur électrique selon au moins l'une des revendications précédentes, **caractérisé en ce que**
la première partie d'accouplement (1) présente un évidement, en particulier une paroi intérieure, réalisé de manière non circulaire, en particulier sous la forme d'un hexagone femelle,
en particulier dans lequel la zone axiale couverte par l'évidement chevauche la zone axiale couverte par l'hexagone mâle (40) de la deuxième partie d'accouplement (2).

9. Moteur électrique selon au moins l'une des revendications précédentes, **caractérisé en ce que**
le moteur électrique présente un frein à commande électromagnétique,
dans lequel un support de garniture de frein (12) est relié à l'arbre de rotor (15) de manière solidaire en rotation mais déplaçable axialement,
dans lequel un enroulement (8), en particulier un enroulement annulaire (8), auquel peut être appliqué un courant électrique, est reçu dans un corps magnétique (10), dans lequel un disque d'induit (11), en particulier un disque d'induit ferromagnétique (11), qui est relié au corps magnétique (10) de manière solidaire en rotation mais déplaçable axialement, est disposé entre le support de garniture de frein (12) et l'enroulement (8),
dans lequel une partie ressort (9) supportée par le corps magnétique (10) presse le disque d'induit vers le support de garniture de frein (12),
en particulier de sorte que, lorsque l'enroulement (8) est alimenté, le disque d'induit (11) est attiré vers l'enroulement (8) et/ou vers le corps magnétique (10) à l'encontre de la force du ressort et que, lorsque l'enroulement (8) n'est pas alimenté, le disque d'induit (11) exerce une pression sur le support de garniture de frein (12), de sorte que le support de garniture de frein (12) est pressé sur une surface de freinage disposée du côté du support de garniture de frein (12) opposé au disque d'induit (11).

10. Moteur électrique selon au moins l'une des revendications précédentes, **caractérisé en ce que**
l'accouplement est disposé entre le frein et le capteur d'angle (6).
